# FASCICULE DE BREVET EUROPEEN

(11) **EP 1 461 292 B1**
(45) Date de publication et mention de la délivrance du brevet: **17.11.2010**
(21) Numéro de dépôt: 02781012.6
(22) Date de dépôt: 29.11.2002
(51) Int. Cl.: C02F 1/72, C02F 11/12

(54) **PROCEDE DE STABILISATION ET CONDITIONNEMENT DE BOUES D'EPURATION MUNICIPALES ET INDUSTRIELLES**
VERFAHREN ZUR STABILISIERUNG UND KONDITIONIERUNG VON KOMMUNALEN UND INDUSTRIELLEN ABWÄSSERN
METHOD FOR STABILIZING AND CONDITIONING URBAN AND INDUSTRIAL WASTEWATER SLUDGE

(30) Priorité: 29.11.2001 WO PCT/CA01/01709
(43) Date de publication de la demande: 29.09.2004
(73) Titulaire: Corporation Biolix, Québec, Québec G1V 4T2 (CA)
(72) Inventeur: BLAIS, Jean-François, Beauport, Québec G1B 3M5 (CA); MERCIER, Guy, Québec, Québec G2E 4P8 (CA); DROGUI, Patrick, Sainte-Foy, Québec G1X 1Y9 (CA)
(74) Mandataire: Casalonga, Axel
(86) Numéro de dépôt international: PCT/CA2002/001808
(87) Numéro de publication internationale: WO 2003/045852

(56) Documents cités:
- WO-A-02/04358
- WO-A-99/37585
- US-A- 4 221 661
- PATENT ABSTRACTS OF JAPAN vol. 017, no. 452 (C-1099), 19 août 1993 (1993-08-19) & JP 05 104100 A (FUJIO OCHIAI;OTHERS: 01), 27 avril 1993 (1993-04-27)
- PATENT ABSTRACTS OF JAPAN vol. 002, no. 144 (C-029), 30 novembre 1978 (1978-11-30) & JP 53 110964 A (KURITA WATER IND LTD), 28 septembre 1978 (1978-09-28)

## Description

La présente invention concerne une procédé de stabilisation et due conditionnement des boues d'épuration municipales et industrielles. Ce procédé permet d'améliorer significativement les caractéristiques de déshydratabilité des boues en haussant la siccité des boues lors de leur déshydratation mécanique.

Le traitement des eaux usées municipales et industrielles entraîne une production croissante de boues d'épuration. Ces diverses boues doivent évidemment être éliminées en minimisant les risques pour la santé humaine et les écosystèmes. Les modes d'élimination de cette biomasse les plus utilisés actuellement sont l'épandage agricole, l'enfouissement sanitaire et l'incinération. La disposition finale de ces rejets est assujettie à diverses contraintes d'ordres technique et économique.

L'incinération et l'enfouissement, bien que parfois nécessaire, ne permettent que l'élimination des boucs, sans tirer avantage de leurs propriétés physiques et chimiques. De plus, la difficulté de déshydrater de manière très performante les boues d'épuration constitue un obstacle important à la disposition des boues par enfouissement ou incinération. La raréfication des sites d'enfouissement sanitaire (hausse des coûts d'acceptation) et les coûts très élevés inhérents à l'incinération des boues ont accru, au cours des dernières années, l'attrait de l'utilisation des boues comme fertilisants agricoles ou sylvicoles.

La valorisation agricole des boues est l'option privilégiée par les autorités gouvernementales et elle est largement pratiquée à travers le monde. À l'heure actuelle, de 30 à 40 % des boues d'épuration produites dans le monde sont utilisées pour la fertilisation des sols. L'intégration de procédés performants de stabilisation des boues dans les stations d'épuration municipales et industrielles permettrait d'accroître les possibilités de valorisation des boues résiduaires de traitement des eaux usées.

De plus, l'utilisation d'un procédé de stabilisation permettant également d'améliorer la capacité de déshydratation des boues serait souhaitable, tenant compte des difficultés associées à cette étape de traitement des boues d'épuration. Ainsi, le conditionnement des boues d'épuration avant leur déshydratation mécanique s'effectue habituellement par un apport de floculant (polymère organique). Or, la déshydratation mécanique des boues biologiques ainsi conditionnées demeure difficile, de sorte que la siccité finale des boues déshydratées reste faible et engendre donc des coûts de transport et de disposition appréciables.

La stabilisation des boues dans les stations d'épuration s'effectue habituellement par les procédés biologiques de digestion aérobie ou anaérobie. La digestion aérobie est une technique de stabilisation des boues utilisée surtout dans les stations d'épuration de petite et moyenne capacités. La stabilisation par digestion aérobie est réalisable sur des boues secondaires ou sur des boues mixtes (primaires et secondaires). Le coût énergétique important associé à l'aération des boues est un facteur limitant l'emploi de cette technologie. Lors de la digestion aérobie, les bactéries aérobies métabolisent les matières organiques solubilisées en dioxyde de carbone, en eau et en nouvelles cellules bactériennes. Lorsque les matières organiques solubles sont épuisées, les cellules bactériennes meurent et libèrent ainsi des éléments nutritifs intracellulaires qui servent de nourriture à d'autres organismes. Le taux de minéralisation des boues dépend principalement du temps de séjour, de la température, ainsi que de l'âge des boues introduites. Un temps de séjour de 14 à 20 jours est habituellement requis pour une stabilisation adéquate de la biomasse.

La digestion anaérobie est aussi une des méthodes les plus couramment utilisées pour la stabilisation des boues d'épuration municipales. L'utilisation de la digestion anaérobie pour la stabilisation des boues d'épuration remonte à plusieurs décennies. De fait, la fermentation méthanique a un très grand pouvoir de biodestruction cellulaire. Elle permet l'élimination d'une quantité importante de matières organiques. La digestion anaérobie des boues comporte trois étapes : a) au cours de la première étape, les composés organiques complexes de la partie solide des boues subissent une transformation en composés organiques complexes solubles; b) après cette solubilisation, les molécules organiques complexes sont converties en acides gras volatils, composés plus simples, par des microorganismes anaérobies; c) la dernière étape de la réaction en série est la minéralisation complète des acides gras volatils en méthane, en dioxyde de carbone et en sulfure d'hydrogène. En cours d'exploitation de la plupart des installations municipales, les trois étapes de fermentation méthanique se produisent simultanément dans un digesteur clos. Le temps de rétention des boues est de l'ordre de 30 jours.

Ces deux techniques de traitement des boues, soit la digestion aérobie et anaérobie, nécessitent l'installation de digesteurs de dimensions importantes, ce qui entraîne des coûts de capitalisation élevés. De plus, l'implantation de tels systèmes dans des stations déjà opérationnelles peut être difficilement réalisable compte-tenu du peu d'espaces disponibles. Il faut également considérer que l'application de ces traitements sur les boues n'améliore pas leur capacité d'être déshydratées et peu même avoir un effet inverse.

Lorsque la réduction du montant d'investissement est un objectif prioritaire, le pouvoir fermentescible des boues peut être diminué, au moins temporairement, par la seule addition de réactifs chimiques en combinaison ou non avec un traitement thermique. L'apport de chaux peut être effectué sur des boues liquides ou sur des boues déshydratées. Pour obtenir un pouvoir de désinfection adéquat, les boues doivent être amenées à pH 12 pendant au moins deux heures et de préférence pendant 24 heures. Le coût réduit de la chaux, son alcalinité et son effet favorable sur la structure physique des boues en font le réactif le plus utilisé. Cette dernière technique ne modifie pas la quantité de matières organiques biodégradables contenues dans les boues. Une reprise de fermentation est donc possible si l'évolution ultérieure des conditions du milieu le permet. Un autre désavantage de cette technique est que la masse de boues n'est pas réduite, mais au contraire, elle est augmentée à la suite de l'addition d'agents alcalins. Il faut également signaler que l'application sur les terres agricoles de boues chaulées n'est pas souhaitable où les sols sont alcalins, comme c'est le cas, par exemple, dans une grande partie de l'ouest du continent américain.

La fixation chimique est un procédé de stabilisation alcalin des boues qui transforme les boues en un produit inerte, lequel peut être utilisé pour le remplissage de terrain en surface ou pour l'application sur les terres. Durant la fixation chimique, une série de réactions chimiques ont lieu en combinant les boues déshydratées avec les réactifs chimiques, ce qui permet l'obtention d'un solide stable du point de vue chimique, biologique et physique. Le produit final est presque inodore et ne contient pratiquement plus de microorganismes pathogènes. De plus, les métaux présents initialement dans les boues sont fixés dans le solide obtenu. Deux procédés de fixation chimique ont été brevetés (brevets américains Nos. 4.853.208 et 6.248.148) et commercialisés: *Chem-fix et N-Viro Soil.* Le procédé *Chem-fix* utilise du ciment Portland et un silicate de sodium afin de produire un sol synthétique à base de boues. Le procédé *N-Viro Soil* emploi de la chaux et de la poussière de ciment comme additifs chimiques. Le procédé *N-Viro Soil* peut également utiliser des cendres volantes et de la poussière de chaux. Bien que ces techniques de stabilisation chimique puissent s'avérer des solutions alternatives prometteuses, des contraintes d'ordres économiques et techniques restreignent, à l'heure actuelle, l'emploi de ces technologies. De plus, il faut noter que l'application de ces traitements ne permet pas d'améliorer la capacité de déshydratation des boues.

Face à la difficulté de déshydratation des boues d'épuration et des problèmes reliés à l'utilisation des procédés usuels de digestion des boues, divers procédés chimiques et thermique combinés de stabilisation et pré-conditionnement des boues d'épuration ont été développés au cours des dernières années. Toutefois, ces procédés demeurent pour la plupart trop onéreux pour être employés couramment dans les stations d'épuration municipales et industrielles.

La stabilisation thermique aussi appelée combustion humide, consiste à chauffer les boues en présence d'air, sous de très fortes pressions (jusqu'à 20 MPa et plus) dans le but de réaliser une oxydation poussée de la matière organique, simultanément à la transformation physique des matières colloïdales (Dollerer et Wilderer, Wat. Sci. Technol., 1993, 28(1), 243-248; Karlsson et Goransson, Wat. Sci. Technol., 1993, 27(5/6), 449-456). Cette technologie de stabilisation sert également au conditionnement thermique des boues. Les boues ainsi traitées peuvent, en effet, être filtrées aisément, avec l'obtention d'une siccité de gâteaux se situant entre 40 et 70 %. Un procédé d'oxydation sous pression (22 MPa) et à haute température (374 °C) a aussi été proposé pour le traitement des déchets biologiques (Modell, Mater. Techno., 1993, 8(7/8), 131).

Une autre approche proposée consiste en l'hydrolyse forte de la matière organique des boues par un traitement thermique (150 à 160 °C) en milieu acide (pH 1 à 2) (Everett, Wat. Res., 1974, 8, 899-906). Ce traitement permet une réduction d'environ 90 % des matières en suspension et hausse de manière importante la filtrabilité des boues non-hydrolysées. Après traitement, les boues et l'hydrolysat sont neutralisés par addition de chaux, ce qui entraîne la production d'une boue inorganique contenant les métaux lourds extraits, d'une boue organique valorisable par l'amendement des sols, et d'une fraction liquide fortement chargée en matière organique qui est retournée en tête de la chaîne de traitement des boues.

L'augmentation de la température des boues conduit à une transformation irréversible de sa structure physique, surtout si elles contiennent une forte proportion de matières organiques et colloïdales. Durant le chauffage, les gels colloïdaux sont éliminés et l'hydrophilie particulaire diminue fortement. La température de chauffage employée pour le conditionnement thermique varie entre 150 et 200 °C et le temps de cuisson entre 30 et 60 minutes, selon le type de boue et la filtrabilité désirée. Ce mode de traitement est applicable sur toutes les boues à prédominance organique et permet l'obtention de performances relativement stables par rapport au conditionnement chimique. De plus, ce traitement permet un épaississement important et rapide des boues après cuisson avec l'obtention de boues décantées à plus de 120 g MES/L et même, dans certains cas, plus de 200 g MES/L. La structure des boues est améliorée de sorte qu'une filtration sans apport de réactifs est toujours possible. De fait, de très fortes siccités des gâteaux de filtre-presse sont atteintes (> 50 % ST) avec un conditionnement thermique. Il faut également tenir compte que les boues ainsi conditionnées sont stérilisées, donc libres de microorganismes pathogènes. L'association de la digestion anaérobie des boues et du conditionnement thermique est l'une des filières les plus intéressantes, car elle permet la réutilisation optimale du biogaz (méthane). L'implantation du pré-conditionnement thermique requiert cependant un investissement coûteux en comparaison au conditionnement chimique. De plus, ce traitement thermique entraîne la production de filtrat fortement chargé en matière organique et en azote ammoniacal qui doit être recyclé en tête de la station d'épuration. Des mesures de prévention spéciales doivent aussi être prises pour limiteur les inconvénients occasionnés par la production d'odeurs: couverture des épaississeurs et bassins de rétention, limitation des purges des réacteurs de cuisson et désodorisation de l'air dans les principales enceintes (cuisson, épaississement, déshydratation).

Fujiyasu *et al.* (brevet canadien No. 1.074.925) ont pour leur part mis au point un procédé de conditionnement chimique de boues biologiques comprenant un apport de 0,5 % à 30 % de peroxyde d'hydrogène et l'addition d'un ion métallique trivalent (ou plus), à raison de 0,1 % à 10 % par rapport à la masse de boues sèches. Ce procédé comprend également l'ajustement du pH des boues lors du traitement à des valeurs comprises entre 4 et 9. Ce procédé de conditionnement, par ajout de produits inorganiques, ne comprend toutefois pas d'étape subséquente de floculation des boues par addition de polymères organiques avant leur déshydratation mécanique. Or, la déshydratation dos boues biologiques sur des équipements, tel que les filtres à bandes presseuses, requiert toutefois la formation de gros flocs, laquelle nécessite toutefois l'ajout de polymères organiques. Les conditions de traitement proposées par Fujiyasu *et al.* comprenant l'ajout de concentrations élevées de peroxyde d'hydrogène et d'un ion trivalent font en sorte de rendre très difficile l'utilisation subséquente d'un polymère organique.

Le document US 4 221 661 décrit un procédé de traitement des boues dans lequel celles-ci sont acidifiées à un pH inférieur à 5, de référence compris entre 3,0 et 4,0, à l'aide d'un acide et éventuellement d'un sel ferrique. Les boues sont alors chauffées jusqu'à une température inférieure ou égale à 95°C, de préférence entre 70°C et 90°C, puis sont mélangées à un agent oxydant. Les boues sont ensuite refroidies à une température inférieure à 70°C, de préférence inférieure à 60°C, avant d'être neutralisées à un pH compris entre 5 et 7 à l'aide d'un agent alcalin. Enfin, un agent déshydratant organique est ajouté afin de favoriser la déshydratation des boues.

La présente invention a donc pour but de mettre au point un nouveau procédé de stabilisation et de conditionnement de boues d'épuration, qui est dépourvu des inconvénients et limitations des procédés de l'art antérieur.

La présente invention vise plus particulièrement, d'une part, à améliorer la filtrabilité des boues afin de réduite le contenu en eau présent dans les boues déshydratées, permettant ainsi de diminuer le volume de boues générées, et d'autre part, à stabiliser les boues du point de vue microbiologique (destruction des microorganismes pathogènes, élimination des odeurs). Considérant que la majorité des stations d'épuration devant traiter les eaux usées municipales et industrielles sont déjà construites et en opération, il est également essentiel de développer un procédé s'intégrant aisément et sans modification importante dans les chaînes de traitement des boues déjà en opération, Il est notamment important d'éviter l'usure prématurée des équipements de déshydratation mécanique des boues causée par la corrosion attribuable à des conditions très acides, basiques ou oxydantes.

La présente invention vise aussi à diminuer les coûts d'opération liés aux procédés de stabilisation requérant le chauffage des boues et le remplacement fréquent de l'équipement pour cause de corrosion rapide. La présente invention concerne un procédé pouvant avantageusement être opéré à la température ambiante et donc sans chauffage, ce qui diminue les coûts et ralentit la corrosion de certains équipement causée en partie par le chauffage durant le traitement.

La présente invention a donc pour objet un procédé de stabilisation et de conditionnement de boues d'épuration, caractérisé en ce que :
a) on traite les boues simultanément avec un acide inorganique et une solution aqueuse d'un sel de fer ferrique et de peroxyde d'hydrogène de façon à obtenir des boucs acidifiées ayant un pH inférieur à 5,0 et supérieur ou égal à 3,0, la solution du sel de fer ferrique étant utilisée en une quantité variant entre 5 et 40 kg Fe/tonne de boues sèches et le peroxyde d'hydrogène étant utilisé en une quantité variant entre 5 et 40 kg H202/tonne de boues sèches ;
b) on mélange les boues traitées durant une période de 15 à 240 minutes pour stabiliser les boues et améliorer leur déshydratabilité ;
c) on flocule les boues stabilisées et ayant un pH inférieur à 5,0 et supérieur ou égal à 3,0 par ajout d'un polymère organique ; et
d) on déshydrate les boues floculées.

Le procédé consiste en un traitement des boues en milieu modérément acide (3,0 ≤ pH < 5,0), avec un acide inorganique et deux agents oxydants, soit un sel de fer ferrique et le peroxyde d'hydrogène. Le sel de fer ferrique sous forme de solution aqueuse est utilisé en une quantité telle à obtenir une concentration variant entre 5 et 40 kg Fe/tonne de boucs sèches (tbs) et acidifier les boues à un pH inférieur à 5,0 et supérieur ou égal à 3,0. Le peroxyde d'hydrogène est également utilisé en une quantité telle à obtenir une concentration variant entre 5 et 40 kg H₂O₂/tbs. L'addition de l'acide inorganique et l'addition des agents oxydants peuvent être effectuées simultanément, c'est à dire en une seule phase, ou encore en deux phases, soit une acidification initiale des boues, suivie de l'addition des agents oxydants.

L'acidification des boues peut être effectuée avec de l'acide sulfurique, chlorhydrique, nitrique, phosphorique ou un acide usée. On utilise de préférence l'acide sulfurique. Dans le cas du procédé opéré en deux phases, l'acidification initiale des boues, avant l'ajout des oxydants, s'effectue habituellement à un pH se situant entre 4,0 et 5,5. Le procédé est nettement moins efficace lorsqu'aucun ajout d'acide n'est fait pour acidifier les boues au-dessous de pH 5,5.

L'utilisation d'un sel de fer ferrique tel que le chlorure ferrique ou le sulfate ferrique permet de diminuer les consommations d'acide et de peroxyde d'hydrogène. Le sel de fer ferrique accentue l'effet du peroxyde d'hydrogène et permet de réduire la solubilisation des éléments nutritifs dans les boues, dont le phosphore et ce, par précipitation de phosphate ferrique. L'utilisation combinée d'un sel de fer ferrique et du peroxyde d'hydrogène induit la formation de radicaux libres (OH°), espèces bactéricides hautement actives susceptibles de réagir avec la quasi totalité des molécules biologiques. L'utilisation de concentrations de sel de fer ferrique supérieures à 40 kg Fe/tbs entraîne une mauvaise floculation des boues lors de l'étape subséquente de floculation par ajout d'un polymère organique. D'autre part, l'ajout d'une concentration de sel de fer ferrique supérieure à 5 kg Fe/tbs est requise pour obtenir une bonne efficacité du procédé en terme d'amélioration de la déshydratabilité des boues, ainsi que de rétention des éléments nutritifs dans les boues déshydratées et, tout particulièrement du phosphore.

De préférence, on ajoute aux boues tout d'abord la solution de sel de fer ferrique, puis le peroxyde d'hydrogène.

En ce qui concerne le peroxyde d'hydrogène, il est nécessaire d'ajouter des concentrations supérieures à 5 kg H₂O₂/tbs et ce, pour obtenir un bon effet de désinfection des boues (ex. enlèvement des coliformes fécaux), ainsi qu'une amélioration significative de la déshydratabilité des boues. D'autre part, l'addition de concentrations supérieures à 40 kg H₂O₂/tbs entraîne des coûts d'opération excessifs et engendre une trop grande hydrolyse de la matière organique des boues, ce qui résulte en une augmentation importante et non-désirée de la concentration de matière organique en solution dans les filtrats ou surnageants lors de la déshydratation des boues.

Dans le cas du procédé opéré en deux phases, l'acidification subséquente des boues à un pH inférieur à 5,0 et supérieur ou égal à 3,0 s'effectue lors de l'addition de la solution de sel de fer ferrique, laquelle cause une chute du pH des boues. Une acidification plus prononcée des boues (pH < 3) cause une corrosion prématurée des équipements de déshydratation et hausse considérablement le coût en produits chimiques. D'autre part, une acidification moins importante des boues (pH ≥ 5,0) cause une perte d'efficacité au niveau de la destruction des indicateurs de pathogènes (coliformes fécaux) et nécessite l'utilisation de concentrations plus élevées d'agents oxydants (sel de fer ferrique et peroxyde d'hydrogène) pour l'obtention de gains similaires au niveau de la déshydratabilité des boues (augmentation de la siccité des boues déshydratées). De préférence, le pH des boues est maintenue à une valeur inférieure ou égale à 4,58 et supérieure ou égale à 3,0.

Facultativement, on peut chauffer les boues traitées entre 25 et 65°C pour hausser la performance du procédé. La teneur initiale en solides totaux des boues traitées se situe normalement entre 5 et 50 g/L. Le traitement chimique est appliqué durant une période de temps suffisante pour améliorer la déshydratabilité des boues et obtenir une bonne stabilisation des boues. La période de temps requise pour atteindre ces objectifs se situe normalement entre 15 et 240 minutes.

Les boues traitées sont ensuite floculées par addition d'un polymère organique. L'utilisation d'un pH modérément acide, inférieur à 5,0 et supérieur ou égal à 3,0, permet de ne pas avoir recours à une neutralisation des boues avant leur floculation par addition de polymères et subséquemment, leur déshydratation mécanique au moyen d'un filtre-presse, filtre à bandes presseuses, centrifugeuse, pressoir rotatif, presse à vis, etc. En effet, les équipements de déshydratation sont habituellement conçus pour opérer à des valeurs de pH supérieures à 3,0. La floculation des boues acidifiées à un pH inférieur 5,0 et supérieur ou égal à 3,0 requiert également beaucoup moins de polymères (environ 0,5 à 3 kg/tbs) que la floculation habituelle de boues non-traitées, ou encore, re-neutralisées autour de pH 7 (4 à 10 kg/tbs). Le polymère utilisé pour la floculation des boues traitées fait partie des polymères organiques usuels employés pour la floculation des boues dans les stations d'épuration des eaux usées. À titre d'exemples, on peut citer les polymères cationiques ou anioniques vendus sous les marques de commerce PERCOL et ZIETAG par la Société Ciba Spécialités Chimiques Canada Inc., et LPM par la Société LPM Technologies Inc. De plus, la déshydratation des boues légèrement acides permet de pouvoir stocker les boues pendant une longue période de temps sans avoir reprise de la putrescibilité des boues.

Facultativement, les boues peuvent aussi être complètement (pH = 7) partiellement (pH < 7) neutralisées par addition d'un agent alcalin avant la phase de floculation des boues. La neutralisation complète ou partielle des boues peut également être effectuée tout de suite après leur déshydratation, ou encore, après une période de stockage des boues déshydratées. L'agent alcalin employé pour neutraliser les boues peut être de la chaux, de l'hydroxyde de sodium, du carbonate de calcium, de l'hydroxyde d'ammonium, de l'hydroxyde de magnésium, de la dolomie ou une base usée industrielle.

Il est également possible de mélanger les boues ayant subi le traitement acide et oxydant avec des boues non-traitées, puis de floculer les boues mélangées par addition d'un polymère et, finalement, de déshydrater celles-ci avec un équipement usuel de déshydratation mécanique. Cette façon de faire est particulièrement performante dans le cas du traitement acide et oxydant de boues biologiques (boues secondaires), lesquelles sont ensuite mélangées avec des boues primaires non-traitées. De manière générale, le procédé peut toutefois être employé pour le traitement des divers types de boues issues du traitement des eaux usées d'origines domestiques, municipales ou industrielles (primaires, secondaires, mixtes, papetières, raffineries, agro-alimentaires, fosses septiques, lagunes, désencrage, etc.).

Le procédé selon l'invention peut être intégré dans les chaînes actuelles de traitement des boues en opération dans les usines d'épuration, sans devoir apporter de correctifs aux installations de traitement et de déshydratation des boues déjà en place. Le procédé permet d'améliorer significativement les caractéristiques de déshydratabilité des boues en haussant la siccité des boues lors de leur déshydratation mécanique. De plus, cette technologie est plus performante que les technologies usuelles de digestion aérobie ou anaérobie mésophiles pour les destructions des indicateurs bactériens de pathogènes (> 3 unités logarithmiques de réduction des coliformes fécaux ou élimination de plus de 99,9 %) et permet donc une stabilisation efficace des boues. Finalement, l'application de cette technologie n'affecte pas de manière significative le contenu en éléments fertilisants des boues déshydratées et permet de réduire considérablement la génération d'odeurs des boues.

Les exemples non-limitatifs suivants illustrent l'invention.

### Exemple 1 : Traitement de boues d'épuration municipales

Le procédé selon l'invention a été testé sur les boues d'épuration issues du traitement d'eaux usées municipales. Les essais ont été effectués avec des volumes de 1 L de boues, lesquels ont été placés dans des réacteurs en verre de 2 L de capacité et agités à l'aide d'une plaque agitatrice et chauffante. La concentration initiale en solides totaux des boues utilisées pour les essais était de 25,4 g/L.

Dans un premier temps, les boues ont été acidifiées par l'addition d'acide sulfurique concentré (H₂SO₄ 10 N). Par la suite, l'addition d'une solution de chlorure ferrique a été réalisée (Fe³⁺ 11,0 % p/p), suivie de celle du peroxyde d'hydrogène (H₂O₂ 30 % v/v). Les boues ont été mélangées lors de l'addition des réactifs chimiques, ainsi que pendant une période d'une heure suivant ces ajouts. Tous les essais dont les conditions expérimentales et les résultats sont rapportés dans le Tableau 1 ci-après, à l'exception de l'essai I, ont été menés à température ambiante (25 ± 2°C). Pour l'essai I, les boues ont d'abord été chauffées à 60 ± 2°C avant l'addition des réactifs chimiques. Pour certains essais (essais A, B et C), les boues traitées ont été partiellement neutralisées par addition d'une solution de chaux hydratée (50 g/L). Pour l'essai A, les boues ont été neutralisées à pH 6,5, alors que pour les essais B et C les boues traitées ont été neutralisées à pH 4,0.

Une fois traitées, les boues ont été floculées par addition d'un polymère organique cationique vendu sous la marque de commerce PERCOL E10 et les boues ont été filtrées sous vide pendant une période de 10 min. à l'aide d'une unité de déshydratation comprenant une pompe vacuum, un buchner et des membranes WHATMAN (marque de commerce) no. 90. La siccité des boues déshydratées a été mesurée après séchage de celles-ci à 105°C pendant une période de 24 h. Les filtrats ont été conservés pour des analyses chimiques (demande chimique en oxygène (DCO), azote ammoniacal (N-NH₄) et nitrates/nitrites (N-(NO₃/NO₂)). Des échantillons de boues non-filtrés ont aussi été conservés pour les mesures de coliformes fécaux (CF) par la technique du nombre le plus probable (NPP).

Le Tableau 1 présente les conditions expérimentales utilisées lors des essais, ainsi que les principaux résultats de ces expérimentations. Les données fournies à la colonne CONT correspondent aux résultats de l'essai contrôle (sans traitement) effectué en triplicata et servant comme base de comparaison avec les boues traitées. Pour les essais A, B et C, les valeurs de pH et de potentiel d'oxydoréduction (POR) ont été mesurées avant neutralisation des boues avec la chaux. Les consommations de réactifs chimiques sont données en kilogramme de produits à 100 % par tonne de boues sèches (tbs). Pour le chlorure ferrique, la consommation indiquée est en kg de Fe/tbs. Le tableau fournit également les données de siccités des boues après déshydratation (% de solides totaux), ainsi que la réduction de la masse de boues à gérer (% de réduction), par rapport aux boues non-traitées, suite à l'augmentation de la siccité des boues attribuable à l'application du procédé.

Les pH finaux mesurés lors des essais se situent entre 2,93 et 4,58, alors que les valeurs de POR finales sont comprises entre 145 et 255 mV. Lors des essais, les consommations d'acide employées se situent dans la gamme de 48 à 112 kg H₂SO₄/tbs (1,22 à 2,84 g H₂SO₄/L). En ce qui concerne l'addition de chlorure ferrique, des apports de 7,9 et 15,8 kg Fe/tbs (0,20 à 0,40 g Fe/L) ont été testés. D'autre part, des ajouts de 11,8 et 19,7 kg H₂O₂/tbs (0,30 à 0,50 g H₂O₂/L) ont été effectués lors des divers essais.

Le dosage optimal de polymère pour la floculation des boues non-traitées se situait approximativement à 5 kg/tbs. En comparaison, des ajouts de 1 à 3 kg polymère/tbs ont été requis pour la floculation des boues traitées.

L'application du procédé permet une élimination efficace des indicateurs de pathogènes (coliformes fécaux). Ainsi, une concentration de 17 000 NPP/gph a été mesurée dans les boues non-traitées, alors que les mesures effectuées sur les boues traitées indiquaient des concentrations inférieures à 10 NPP/gph (> 99,94 % de réduction), sauf pour l'essai E pour lequel la concentration de coliformes fécaux a été établie à 130 NPP/gph. Ce dernier résultat s'explique probablement par le pH plus élevé employé lors de la réalisation de l'essai E.

Les mesures de DCO, de N-NH₄ et de N-(NO₃/NO₂) dans les filtrats de déshydratation des boues montrent que l'application du procédé ne cause pas de solubilisation significative de la matière organique des boues, ni une perte appréciable de la valeur fertilisante des boues.

Une valeur moyenne de siccité de 15,6 % (p/p) a été mesurée lors de l'essai contrôle de déshydratation des boues non-traitées effectué en triplicata. L'application du procédé a permis d'accroître la siccité à des valeurs comprises entre 20,9 et 28,5 %, soit des gains de 5,3 à 12,9 points de siccité. Cette hausse de la siccité des boues déshydratées permet de réduire substantiellement la quantité de boues déshydratées produites, soit entre 28,0 et 45,2 %.

**Tableau 1 Essais de pré-conditionnement et de stabilisation des boues secondaires d'une station épuration d'eaux usées municipales**

| **Paramètres** | **Essais** | | | | | | | | | |
|---|---|---|---|---|---|---|---|---|---|---|
| | **CON T** | **A** | **B** | **C** | **D** | **E** | **F** | **G** | **H** | **I** |
| pH final | 7,10 | 2,93 | 2,47 | 3,12 | 3,68 | 4,58 | 3,67 | 3,60 | 3,44 | 3,42 |
| POR final (mV) | -218 | 252 | 271 | 217 | 255 | 145 | 248 | 195 | 229 | 237 |
| Temp. (°C) | 25 | 25 | 25 | 25 | 25 | 25 | 25 | 25 | 25 | 60 |
| **Consommation (kg/tbs)** | | | | | | | | | | |
| H₂SO₄ | 0 | 112 | 112 | 100 | 71 | 48 | 69 | 69 | 70 | 70 |
| FeCl₃ (Fe) | 0 | 7,9 | 7,9 | 7,9 | 7,9 | 7,9 | 7,9 | 15,8 | 15,8 | 15,8 |
| H₂O₂ | 0 | 11,8 | 11,8 | 11,8 | 11,8 | 11,8 | 19,7 | 11,8 | 19,7 | 19,7 |
| Polymère | 5,1 | 3,1 | 1,5 | 1,0 | 2,1 | 2,1 | 3,1 | 2,1 | 2,1 | 1,0 |
| CF boues (NPP/gph) | 17000 | 7 | < 2 | 8 | 7 | 130 | 2 | 4 | 8 | 4 |
| DCO filtrat (mg/L) | 1750 | 1320 | 1820 | 1790 | 1560 | 1530 | 1520 | 1580 | 1550 | 2190 |
| N-NH₄ filtrat (mg/L) | 135 | 105 | 151 | 148 | 151 | 147 | 156 | 160 | 163 | 178 |
| N-(NO₃/NO₂) filtrat (mg/L) | 0,18 | 0,15 | 0,09 | 0,15 | 0,14 | 0,10 | 0,07 | 0,09 | 0,57 | 0,47 |
| Siccités après déshydratation (% p/p) | 15,6 | 23,4 | 22,5 | 23,6 | 21,7 | 20,9 | 22,4 | 21,8 | 24,8 | 28,5 |
| Réduction de la masse de boues (% p/p) | - | 33,2 | 30,6 | 33,8 | 28,0 | 25,4 | 30,3 | 28,4 | 37,1 | 45,2 |

### Exemple 2 : Traitement de boues secondaires de papetières

Le procédé selon l'invention a été testé sur les boues d'épuration issues du traitement secondaire d'eaux usées d'une papetière. Les essais ont été effectués avec des volumes de 1 L de boues, lesquels ont été placés dans des réacteurs en verre de 2 L de capacité et agités à l'aide d'une plaque agitatrice et chauffante. La concentration initiale en solides totaux des boues utilisées pour les essais était de 14,1 g/L.

Dans un premier temps, les boues ont été acidifiées par l'addition d'acide sulfurique concentré (H₂SO₄ 10 N). Par la suite, l'addition d'une solution de chlorure ferrique a été réalisée (Fe³⁺ 11,0 % p/p), suivie de celle du peroxyde d'hydrogène (H₂O₂ 30 % v/v). Les boues ont été mélangées lors de l'addition des réactifs chimiques, ainsi que pendant une période d'une heure suivant ces ajouts. Les essais ont été menés à des températures se situant entre 25 et 80°C. Les boues n'ont pas été neutralisées avant leur déshydratation.

Une fois traitées, les boues ont été floculées par addition d'un polymère organique cationique vendu sous la marque de commerce ZIETAG 7654 et les boues ont été filtrées sous vide pendant une période de 10 min. à l'aide d'une unité de déshydratation comprenant une pompe vacuum, un buchner et des membranes WHATMAN (marque de commerce) no. 4. La siccité des boues déshydratées a été mesurée après séchage de celles-ci à 105°C pendant une période de 24 h.

Le Tableau 2 ci-après présente les conditions expérimentales utilisées lors des essais, ainsi que les principaux résultats de ces expérimentations. Les données fournies à la colonne CONT correspondent aux résultats de l'essai contrôle (sans traitement) effectué en triplicata et servant comme base de comparaison avec les boues traitées. Les consommations de réactifs chimiques sont données en kilogramme de produits à 100 % par tonne de boues sèches (tbs). Pour le chlorure ferrique, la consommation indiquée est en kg de Fe/tbs. Le tableau donne également les données de siccités des boues après leur déshydratation (% de solides totaux), ainsi que le pourcentage de réduction de la masse de boues à gérer, par rapport aux boues non-traitées, suite à l'augmentation de la siccité des boues attribuable à l'application du procédé.

**Tableau 2 Essais de stabilisation et conditionnement des boues secondaires d'une station d'épuration d'eaux usées d'une papetière**

| **Paramètres** | | | | | | | | | | | | | | |
|---|---|---|---|---|---|---|---|---|---|---|---|---|---|---|
| | **CONT** | **J** | **K** | **L** | **M** | **N** | **O** | **P** | **Q** | **R** | **S** | **T** | **U** | **V** |
| pH final | 6,51 | 2,95 | 3,44 | 4,22 | 2,91 | 3,34 | 3,80 | 3,43 | 3,96 | 4,57 | 3,31 | 3,74 | 3,36 | 3,64 |
| POR final (mV) | - 97 | 404 | 311 | 170 | 359 | 293 | 283 | 311 | 213 | 173 | 440 | 320 | 361 | 290 |
| Temp. (°C) | 25 | 25 | 40 | 60 | 60 | 60 | 60 | 25 | 40 | 60 | 25 | 25 | 25 | 25 |
| Durée (min) | 60 | 60 | 60 | 60 | 60 | 60 | 60 | 60 | 60 | 60 | 30 | 60 | 120 | 240 |
| **Consommation (kg/tbs)** | | | | | | | | | | | | | | |
| H₂SO₄ | 0 | 11,7 | 4,7 | 7,0 | 9,3 | 11,7 | 7,0 | 7,0 | 8,2 | 4,7 | 3,0 | 1,5 | 3,0 | 3,0 |
| FeCl₃ (Fe) | 0 | 8,3 | 10,4 | 7,1 | 14,2 | 8,3 | 10,4 | 7,1 | 7,1 | 7,1 | 13,6 | 13,6 | 13,6 | 13,6 |
| H₂O₂ | 0 | 35,4 | 21,2 | 10,6 | 21,2 | 35,4 | 35,4 | 10,6 | 10,6 | 10,6 | 27,8 | 27,8 | 27,8 | 27,8 |
| Polymère | 4,0 | 3,0 | 3,0 | 4,0 | 2,0 | 3,0 | 2,0 | 3,0 | 3,0 | 3,0 | 2,0 | 2,0 | 2,0 | 2,0 |
| Siccités après déshydratation (% p/p) | 6,0 | 13,2 | 20,8 | 15,2 | 22,6 | 16,5 | 20,6 | 14,4 | 13,1 | 14,6 | 13,0 | 14,8 | 14,3 | 12,6 |
| Réduction de la masse de boues (% p/p) | - | 54,5 | 71,0 | 60,3 | 73,3 | 63,5 | 70,8 | 58,0 | 54,1 | 58,7 | 53,6 | 59,2 | 57,9 | 52,1 |

Les pH finaux mesurés lors des essais se situent entre 2,91 et 4,57, alors que les valeurs de POR finales sont comprises entre 170 et 440 mV. Lors des essais, les consommations d'acide employées se situent dans la gamme de 1,5 à 11,7g H₂SO₄/tbs (0,02 à 0,17 g H₂SO₄/L). En ce qui concerne l'addition de chlorure ferrique, des apports de 7,1 à 14,2 kg Fe/tbs (0,10 à 0,20 g Fe/L) ont été employés. De plus, des concentrations de 10,6 et 35,4 kg H₂O₂/tbs (0,15 à 0,50 g H₂O₂/L) ont été ajoutées dans les boues lors des différents essais. Le dosage optimal de polymère pour la floculation des boues non-traitées se situait environ à 4 kg/tbs. En comparaison, des ajouts de 2 à 4 kg polymère/tbs ont été requis pour la floculation des boues traitées.

Une valeur moyenne de siccité de seulement 6,0 % (p/p) a été mesurée lors de l'essai contrôle de déshydratation des boues non-traitées effectué en triplicata. L'application du procédé a permis d'accroître la siccité à des valeurs comprises entre 13,1 et 12,6 %, soit des gains de 6,6 à 16,6 points de siccité. Cette hausse de la siccité des boues déshydratées permet de réduire fortement la quantité de boues générées, soit entre 52,1 et 73,3 %. Par ailleurs, des tests visant à étudier l'influence de la durée du traitement sur la siccité des boues ont été menés (Essais S,T,U, V). La durée de traitement variant de 30 à 240 minutes n'affecte pas de façon très significative la siccité des boues déshydratées. Un temps de réaction moyen de 60 minutes à température ambiante s'est révélé suffisant pour éliminer la quasi totalité des microorganismes dans les boues d'épuration municipales (Tableau 1). Ce temps de réaction peut être réduit à une température élevée (40 ou 60°C). D'une façon générale, l'activité d'un désinfectant (tel que le peroxyde d'hydrogène) croît avec la température. Une augmentation de la température a pour effet d'augmenter les vitesses de réaction chimique et biochimique.

### Exemple 3 : Traitement des boues de papetières en mode continu

Le procédé selon l'invention a aussi été testé en mode continu à l'échelle pilote sur les boues mixtes (mélange de boues primaires et secondaires) d'épuration issues du traitement secondaire d'eaux usées de deux papetières (1 et 2). Les essais ont été effectués avec des réacteurs de type cuve agitée ayant des volumes utiles de 1 et 60 m³ de boues. La concentration initiale en solides totaux des boues utilisées pour les essais se situait entre 25 et 30 g/L.

Les boues ont été traitées par un ajout simultané, à l'aide de pompes doseuses, d'acide sulfurique et des deux agents oxydants (chlorure ferrique et peroxyde d'hydrogène) et ce, dans un seul réacteur alimenté de boues en régime continu. Un temps de rétention hydraulique (TRH) de 60 min a été utilisé lors de l'essai W (papetière 1), alors qu'un TRH de 45 min a été appliqué pour les essais X et Y (papetière 2). Une fois traitées, les boues ont été floculées par addition d'un polymère organique cationique commercial et ont été filtrées sur un filtre à bande presseuse industriel.

Le Tableau 3 présente les conditions expérimentales utilisées lors des essais, ainsi que les principaux résultats de ces expérimentations. Les données fournies dans les colonnes CONT correspondent aux résultats des essais contrôles (sans traitement) servant comme base de comparaison avec les boues traitées.

Les pH moyens mesurés lors des essais sont respectivement de 4,19 (essai W), 4,04 (essai X) et 4,02 (essai Y). Lors des essais, les consommations d'acide employées se situent dans la gamme de 18 à 57 kg H₂SO₄/tbs. En ce qui concerne l'addition de chlorure ferrique, des apports moyens se situant entre 18,7 et 44,1 kg Fe/tbs ont été testés. D'autre part, des ajouts moyens de peroxyde compris entre 17,6 et 32,1 kg H₂O₂/tbs ont été effectués lors des essais pilotes.

Le dosage optimal de polymère pour la floculation des boues non-traitées se situait approximativement à 6 ou 7 kg/tbs. En comparaison, des ajouts de 2,2 à 5,4 kg polymère/tbs ont été requis pour la floculation des boues traitées.

L'application du procédé permet une élimination efficace des indicateurs de pathogènes (coliformes fécaux). Ainsi, une concentration de 2 300 NPP/gph a été mesurée dans les boues non-traitées (essai W), alors que les mesures effectuées sur les boues traitées indiquaient une concentration inférieure à 9 NPP/gph (> 99,6 % de réduction).

Les mesures de DCO, de phosphore total (Pₜ), de matières en suspension (MES), de N-NH₄ et d'azote Kjeldahl (N_{NTK}) dans les filtrats de déshydratation des boues montrent que l'application du procédé ne cause pas de solubilisation significative de la matière organique des boues, ni une perte appréciable de la valeur fertilisant des boues.

Des valeurs moyennes de siccité comprises entre 18,8 et 20,1 % (p/p) ont été mesurées lors des essais contrôles de déshydratation des boues non-traitées. L'application du procédé a permis d'accroître la siccité à des valeurs comprises entre 25,0 et 29,8 %, soit des gains de 6,2 à 9,7 points de siccité. Cette hausse de la siccité des boues déshydratées permet de réduire significativement le volume de boues déshydratées produites, soit entre 24,8 et 32,5 %.

**Tableau 3 Essais en mode continu de pré-conditionnement et de stabilisation des boues mixtes de stations d'épuration des eaux usées de papetières**

| **Paramètres** | **Papetière 1** | | | **Papetière 2** | | |
|---|---|---|---|---|---|---|
| | **CONT** | **W** | **CONT** | **X** | **CONT** | **Y** |
| **Volume utile (m³)** | 1 | 1 | 60 | 60 | 60 | 60 |
| **Ratio prim./sec. (%p/p)** | 55/45 | 55/45 | 50/50 | 50/50 | 40/60 | 40/60 |
| **TRH (min)** | 60 | 60 | 45 | 45 | 45 | 45 |
| **pH moyen** | 6,32 | 4,19 | 7,07 | 4,04 | 7,26 | 4,02 |
| **Temp. (°C)** | 25 | 31 | 30 | 33 | n.d. | n.d. |
| **Consommation (kg/tbs)** | | | | | | |
| **H₂SO₄** | 0 | 27,1 | 0 | 18,4 | 0 | 56,7 |
| **FeCl₃ (Fe)** | 0 | 23,2 | 0 | 44,1 | 0 | 18,7 |
| **H₂O₂** | 0 | 19,0 | 0 | 32,1 | 0 | 17,6 |
| **Polymère** | 7,4 | 2,2 | 6,0 | 5,4 | 6,9 | 3,0 |
| **CF boues (NPP/gph)** | 2300 | < 9 | n.d. | n.d. | n.d. | n.d. |
| **DCO filtrat (mg/L)** | 1440 | 624 | n.d. | n.d. | n.d. | n.d. |
| **Pₜ filtrat (mg/L)** | 7,57 | 0,74 | n.d. | n.d. | n.d. | n.d. |
| **N_{NTK} filtrat (mg/L)** | 45,1 | 3,91 | n.d. | n.d. | n.d. | n.d. |
| **N-NH₄ filtrat (mg/L)** | 18,0 | 0,92 | n.d. | n.d. | n.d. | n.d. |
| **MES filtrat (mg/L)** | 767 | 130 | n.d. | n.d. | n.d. | n.d. |
| **Siccités après déshydratation (% p/p)** | 18,8 | 25,0 | 20,1 | 29,8 | 20,0 | 27,8 |
| **Réduction de la masse de boues (% p/p)** | - | 24,8 | - | 32,5 | - | 28,1 |

## Revendications

1. Procédé de stabilisation et de conditionnement de boues d'épuration, **caractérisé en ce que** :
a) on traite les boues simultanément avec un acide inorganique et une solution aqueuse d'un sel de fer ferrique et de peroxyde d'hydrogène de façon à obtenir des boues acidifiées ayant un pH inférieur à 5,0 et supérieur ou égal à 3,0, la solution du sel de fer ferrique étant utilisée en une quantité variant entre 5 et 40 kg Fe/tonne de boues sèches et le peroxyde d'hydrogène étant utilisé en une quantité variant entre 5 et 40 kg H₂O₂/tonne de boues sèches ;
b) on mélange les boues traitées durant une période de 15 à 240 minutes pour stabiliser les boues et améliorer leur déshydratabilité ;
c) on flocule les boues stabilisées et ayant un pH inférieur à 5,0 et supérieur ou égal à 3,0 par ajout d'un polymère organique ; et
d) on déshydrate les boues floculées.

2. Procédé selon la revendication 1, **caractérisé en ce que** l'acide inorganique est choisi dans le groupe constitué par les acides sulfurique, chlorhydrique, nitrique et phosphorique.

3. Procédé selon la revendication 2, **caractérisé en ce que** l'acide inorganique est l'acide sulfurique.

4. Procédé selon l'une quelconque des revendications 1 à 3, **caractérisé en ce que** le sel de fer ferrique est le chlorure ferrique.

5. Procédé selon l'une quelconque des revendications 1 à 3, **caractérisé en ce que** le sel de fer ferrique est le sulfate ferrique.

6. Procédé selon l'une quelconque des revendications 1 à 5, **caractérisé en ce qu'**avant l'étape (b), les boues traitées sont chauffées à une température comprise entre 20 et 65°C.

7. Procédé selon l'une quelconque des revendications 1 à 6, **caractérisé en ce qu'**avant l'étape (c), les boues traitées sont mélangées avec des boues non-traitées.

8. Procédé selon l'une quelconque des revendications 1 à 7, **caractérisé en ce que** les boues ont une concentration initiale en solides totaux variant entre 5 et 50 g/L.

9. Procédé selon l'une quelconque des revendications 1 à 8, **caractérisé en ce que** les boues sont choisies dans le groupe constitué par les boues primaires, les boues secondaires, les boues mixtes, les boues domestiques, les boues municipales, les boues papetières, les boues de raffineries, les boues agroalimentaires, les boues de fosses septiques, les boues de lagunes et les boues de désencrage.

10. Procédé selon l'une quelconque des revendications 1 à 9, **caractérisé en ce qu'**il est opéré en mode continu.

## Claims

1. Process for the stabilization and conditioning of sewage sludge, **characterized in that**:
a) the sludge is treated simultaneously with an inorganic acid and an aqueous solution of a ferric iron salt and hydrogen peroxide, so as to obtain acidified sludge having a pH of less than 5.0 and greater than or equal to 3.0, the solution of the ferric iron salt being used in an amount varying between 5 and 40 kg Fe/tonne of dried sludge and the hydrogen peroxide being used in an amount varying between 5 and 40 kg H₂O₂/tonne of dried sludge;
b) the treated sludge is mixed for a period of 15 to 240 minutes in order to stabilize the sludge and to improve its ability to be dewatered;
c) the stabilized sludge having a pH of less than 5.0 and greater than or equal 3.0 is flocculated by addition of an organic polymer; and
d) the flocculated sludge is dewatered.

2. Process according to Claim 1, **characterized in that** the inorganic acid is chosen from the group consisting of sulphuric acid, hydrochloric acid, nitric acid and phosphoric acid.

3. Process according to Claim 2, **characterized in that** the inorganic acid is sulphuric acid.

4. Process according to any one of Claims 1 to 3, **characterized in that** the ferric iron salt is ferric chloride.

5. Process according to any one of Claims 1 to 3, **characterized in that** the ferric iron salt is ferric sulphate.

6. Process according to any one of Claims 1 to 5, **characterized in that**, before stage (b), the treated sludge is heated at a temperature of between 20 and 65°C.

7. Process according to any one of Claims 1 to 6, **characterized in that**, before stage (c), the treated sludge is mixed with untreated sludge.

8. Process according to any one of Claims 1 to 7, **characterized in that** the sludge has a starting concentration of total solids varying between 5 and 50 g/1.

9. Process according to any one of Claims 1 to 8, **characterized in that** the sludge is chosen from the group consisting of primary sludge, secondary sludge, mixed sludge, domestic sludge, municipal sludge, paper mill sludge, refinery sludge, food-processing sludge, septic tank sludge, lagoon sludge and de-inking sludge.

10. Process according to any one of Claims 1 to 9, **characterized in that** it is carried out continuously.

## Patentansprüche

1. Verfahren zur Stabilisierung und Konditionierung von Klärschlämmen, **dadurch gekennzeichnet, dass**:
a) die Schlämme gleichzeitig mit einer anorganischen Säure und einer wässrigen Lösung eines Eisen(III)salzes und von Wasserstoffperoxid derart behandelt werden, dass angesäuerte Schlämme mit einem pH-Wert von weniger als 5,0 und von mindestens 3,0 erhalten werden, wobei die Eisen(III)salzlösung in einer Menge verwendet wird, die zwischen 5 und 40 kg Fe/Tonne an Trockenschlamm variiert, und das Wasserstoffperoxid in einer Menge verwendet wird, die zwischen 5 und 40 kg H₂O₂/Tonne an Trockenschlamm variiert;
b) die behandelten Schlämme während eines Zeitabschnitts von 15 bis 240 Minuten durchmischt werden, um die Schlämme zu stabilisieren und ihre Fähigkeit zum Wasserentzug zu verbessern;
c) die stabilisierten Schlämme, deren pH-Wert kleiner als 5,0 ist und mindestens 3,0 beträgt, durch Zusatz eines organischen Polymers eine Flockung erfahren; und
d) den geflockten Schlämmen das Wasser entzogen wird.

2. Verfahren nach Anspruch 1, **dadurch gekennzeichnet, dass** die anorganische Säure aus der Gruppe gewählt ist, die aus Schwefelsäure, Salzsäure, Salpetersäure und Phosphorsäure besteht.

3. Verfahren nach Anspruch 2, **dadurch gekennzeichnet, dass** es sich bei der anorganischen Säure um Schwefelsäure handelt.

4. Verfahren nach einem beliebigen der Ansprüche 1 bis 3, **dadurch gekennzeichnet, dass** es sich bei dem Eisen(III)salz um Eisen(III)chlorid handelt.

5. Verfahren nach einem beliebigen der Ansprüche 1 bis 3, **dadurch gekennzeichnet, dass** es sich bei dem Eisen(III)salz um Eisen(III)sulfat handelt.

6. Verfahren nach einem beliebigen der Ansprüche 1 bis 5, **dadurch gekennzeichnet, dass** die behandelten Schlämme vor dem Schritt b) auf eine Temperatur von 20 bis 65 °C erwärmt werden.

7. Verfahren nach einem beliebigen der Ansprüche 1 bis 6, **dadurch gekennzeichnet, dass** die behandelten Schlämme vor dem Schritt c) mit unbehandelten Schlämmen vermischt werden.

8. Verfahren nach einem beliebigen der Ansprüche 1 bis 7, **dadurch gekennzeichnet, dass** die Schlämme einen anfänglichen Gesamttrockenmassegehalt aufweisen, der zwischen 5 und 50 g/l variiert.

9. Verfahren nach einem beliebigen der Ansprüche 1 bis 8, **dadurch gekennzeichnet, dass** die Schlämme aus der Gruppe gewählt sind, die aus den Primärschlämmen, den Sekundärschlämmen, den Mischschlämmen, den Haushaltsschlämmen, den kommunalen Schlämmen, den Schlämmen aus der Papierherstellung, den Raffinerieschlämmen, den Schlämmen aus der Landwirtschaft und Nahrungsmittelerzeugung, den Schlämmen aus Klärgruben, den Schlämmen aus Lagunen und den Deinkingschlämmen besteht.

10. Verfahren nach einem beliebigen der Ansprüche 1 bis 9, **dadurch gekennzeichnet, dass** es kontinuierlich betrieben wird.
